# EUROPÄISCHE PATENTSCHRIFT

(11) **EP 3 394 468 B1**
(45) Veröffentlichungstag und Bekanntmachung des Hinweises auf die Patenterteilung: **06.05.2020**
(21) Anmeldenummer: 16793906.5
(22) Anmeldetag: 10.11.2016
(51) Int. Cl.: F16D 65/12

(54) **BREMSSCHEIBE FÜR EIN FAHRZEUG**
BRAKE DISC FOR A VEHICLE
DISQUE DE FREIN POUR VÉHICULE

(30) Priorität: 22.12.2015 DE 102015226451
(43) Veröffentlichungstag der Anmeldung: 31.10.2018
(73) Patentinhaber: Bayerische Motoren Werke Aktiengesellschaft, 80809 München (DE)
(72) Erfinder: HOFSTETTER, Josef, 85395 Wimpasing (DE); KOKOTT, Kordian, 85435 Erding (DE); SCHULZ, Ulf, 13158 Berlin (DE)
(86) Internationale Anmeldenummer: PCT/EP2016/077234
(87) Internationale Veröffentlichungsnummer: WO 2017/108257

(56) Entgegenhaltungen:
- WO-A1-2015/022126
- DE-A1- 10 032 972
- DE-A1-102009 037 817
- GB-A- 142 468

## Beschreibung

Die Erfindung betrifft eine Verbund-Bremsscheibe für ein Kraftfahrzeug, nach dem Oberbegriff des ersten Anspruchs. Bremsscheiben sind mit einem Rad koaxial montierte Bestandteile eines Bremssystems für Kraftfahrzeuge, welche einen Reibring und einen Bremsscheibentopf aufweisen. Der Bremsscheibentopf dient dabei der Befestigung der Bremsscheibe an einer Radnabe, während der Reibring während des Bremsvorganges in tribologischen Kontakt mit den Bremsbelägen des Bremssystems gebracht wird. Hierdurch wird die kinetische Energie des Kraftfahrzeuges in Form von Reibungswärme abgebaut, das Fahrzeug wird abgebremst.

Solche Bremsscheiben können ein- oder mehrteilig gefertigt werden, wobei die größten Beanspruchungen an das Material des Reibringes gerichtet sind. Reibringe werden daher in der Regel als Gussbauteile, insbesondere in GG-15 oder GG-25, ausgeführt. Zur Abfuhr der beim Bremsvorgang entstehenden Wärme aus dem Reibring sind solche Reibringe häufig in Form innenbelüfteter Reibringe gestaltet, das heißt, sie sind mit Kanälen oder Bohrungen versehen, welche mit Luft durchströmt sind, um so die Wärmeabfuhr aus dem Reibring zu verbessern.

Eine solche Bremsscheibe, bei welcher der oder die (üblicherweise zusammenhängenden) Reibringe getrennt vom Bremsscheibentopf gefertigt werden und danach mit diesem geeignet verbunden werden hat den Vorteil, dass der/die Reibring(e) einerseits und der Bremsscheibentopf andererseits aus den für die jeweiligen Anforderungen günstigsten Materialien gefertigt sein können. Hierdurch kann beispielsweise zum einen eine Gewichtsersparnis erzielt werden, und zum anderen ist damit eine vorteilhafte Entkoppelung zwischen dem Reibring und dem Bremsscheibentopf möglich.

Die DE 100 32 972 A1 beschreibt eine solche Verbund-Bremsscheibe, bei der der im Wesentlichen wie üblich geformte Bremsscheibentopf einen bezüglich der Drehachse der Scheibenbremse kreiszylindrischen Mantel besitzt, in dem Durchbrüche oder zumindest Abschnitte mit reduzierter Wandstärke vorgesehen sind. Damit besitzt dieser Bremsscheibentopf eine gewisse Elastizität, die einer im Wesentlichen ungehinderten thermischen Reibringdehnung förderlich ist, d.h. die nicht vermeidbare thermische Reibringdehnung wird somit durch den Bremsscheibentopf nicht nennenswert behindert, so dass keine Spannungen aufgebaut werden und unerwünschte Reibringverformungen ausgeschlossen werden. In dieser Schrift ist als Material für den Bremsscheibentopf ein höherfestes Stahlmaterial oder ähnliches vorgeschlagen. Dabei erfordert diese bekannte Konstruktion relativ viel Bauraum in radialer Richtung, weshalb eine Anwendung nur bei größeren Bremsscheibendimensionen (Durchmessern) möglich ist.

Des Weiteren zeigt der nächstliegende Stand der Technik, die WO 2015/022126 A1, eine Bremsscheibe für ein Fahrzeug mit einem Bremsscheibentopf, dessen Mantel an seinem Außenumfang Abschnitte mit reduzierter Wandstärke besitzt, die der teilweisen Platzierung von axial ausgerichteten Verbindungsmitteln zwischen Bremsscheibentopf und Reibring dienen.

Aufgabe der vorliegenden Erfindung ist, eine Bremsschreibe bereit zu stellen, bei welcher durch eine geeignete Verbindung von Reibring und Bremsscheibentopf der Platzbedarf für die Anbindung der Bremsscheibe an der Radnabe gering gehalten werden kann. Zusätzlich soll eine Verbindung zwischen Bremsscheibentopf und Reibring bereitgestellt werden, die bei Erhitzung durch das Bremsen bezüglich der Reduktion des Spannungsaufbaus in der Bremsscheibe noch optimiert und weiter verbessert ist.

Die Aufgabe wird erfindungsgemäß mit den Merkmalen des Anspruchs 1 gelöst. Weitere Ausgestaltungen der Erfindung ergeben sich aus den abhängigen Ansprüchen.

Nach der Erfindung ist eine Bremsscheibe für eine Scheibenbremse, die aus einem Bremsscheibentopf und wenigstens einem mit diesem über Nieten verbundenen Reibring besteht, der zu dem Bremsscheibentopf ausschließlich über die Nieten zentriert ist, wobei ein Mantel des Bremsscheibentopfs mit Abschnitten mit reduzierter Wandstärke und/oder Durchbrüchen versehen ist, die am Außenumfang des Bremsscheibentopf-Mantels befindliche, axial gerichtete Material-Aussparungen sind, die zur zumindest teilweisen Platzierung der axial gerichteten Nieten dienen, dadurch gekennzeichnet, dass jeder Niet, vor seiner Verformung, wenigstens über einen Teilbereich seines Nietschaftes im Bereich des Bremsscheibentopfs, von einem Setzkopf ausgehend, einen Konus besitzt, dessen Durchmesser sich zu einem Niet-Schließkopf hin gerichtet verkleinert und dass ein Übergang vom Nietschaft zum Niet-Setzkopf vorgesehen ist, der mit einem Axial-Freistich am Niet-Setzkopf versehen ist.

Eine ausschließliche Zentrierung von Bremsscheibentopf und Reibring zueinander über die Nieten hat den Vorteil, dass bei Erhitzung und verschiedenen Ausdehnungskoeffizienten der Werkstoffe keine Spannungen entstehen können aufgrund von weiteren Festlegungen der beiden Teile zueinander. Um ein optimales Tragbild der Nieten gewährleiten zu können, speziell im relevanten Querschnitt, sollten diese dann speziell ausgeformt werden, mit geometrischem Vorhalt um einen Kraftübertragungs-Verlust, der bei Standardnieten nach dem Stand der Technik entsteht auszugleichen, weil diese bei ihrer Verformung eine sich verjüngende Tonnenform mit schlechterem Tragbild ausbilden. Versuche haben gezeigt, dass eine beim Setzen des Nietes voreilende Leibung direkt am Setzkopf, zum Beispiel ein Konus über einen Teilbereich des Nietschafts, die durch die im Vernietungsprozess nach dem Stand der Technik herbeigeführte Tonnenform verhindert und das Tragbild des Niets in der Nähe des Setzkopfs optimiert. Die Nietgeometrie wird durch einen Übergang vom Nietschaft zum Niet-Setzkopf weiter optimiert, wenn dieser mit einem Axial-Freistich am Niet-Setzkopf versehen ist. Versuche haben gezeigt, dass dadurch das Tragbild zwischen Niet und Bremsscheibentopf noch weiter optimiert und somit die Verbindung zu noch größerer Kraftübertragung bei längerer Standzeit geeignet ist.

Des Weiteren kann die Bremsscheibe vorteilhafterweise so gestaltet sein, dass deren Reibring wenigstens einen von der Reibfläche nach innen gerichteten Befestigungsfortsatz aufweist, mit dem ein Kragen eines Bremsscheibentopf-Mantels durch die Nieten verbunden ist. Durch den Befestigungsfortsatz kann eine Auflagefläche für den Kragen des Bremsscheibentopfs geschaffen werden, die wie dieser vor dem Fügevorgang zum Beispiel spanend mit einer vorteilhaften Oberflächenbeschaffenheit für die Fügepaarung versehen werden kann. Die Auflagefläche von Bremsscheibentopf-Kragen und Reibring kann bezüglich der Wärmeübertragung so optimiert werden, dass durch den Wärmeübergang bei Erhitzung der Reibscheibe möglichst geringe Spannungen in den Fügepartnern entstehen.

Weitere vorteilhafte Ausführungsformen der Erfindung zeichnen sich dadurch aus, dass die Nieten aus einem austenistischen, nichtrostenden Stahl bestehen. Dabei kann der Bremsscheibentopf aus Leichtmetall oder aus Stahl oder aus einem Nichtmetallwerkstoff bestehen, das heißt als Materialien für den Topf kommen vorzugsweise höherfeste hochfeste Leichtmetalle (u.a. Magnesium), oder ein hochfestes, dünnwandiges Stahlblech oder Aluminium und andere Nichteisen- bzw. Nichtmetallwerkstoffe in Frage. Der Bremsscheibentopf ist daher bspw. durch ein Gussverfahren oder ein Schmiedeverfahren oder durch Fließpressen herstellbar. Bei Verwendung eines erfindungsgemäßen in einem Leichtbaumaterial ausgeführten Bremsscheibentopfes ist neben Aluminiumrädern ein Einsatz von Stahlrädern möglich.

Wenn der Bremsscheibentopf und der Reibring mittels eines Taumel-Niet-Verfahrens miteinander verbunden werden, kann eine Flächenpressung der Nieten auch auf dem Graugussmaterial des Reibrings möglichst gering gehalten werden.

In einer weiteren vorteilhaften Ausführungsform der Erfindung besitzt die mit der Bohrung zur Aufnahme des Niets in der Reibscheibe korrespondierende Bohrung zur Aufnahme des Niets im Kragen des Bremsscheibentopfs an ihrem von der Reibscheibe weg gerichteten Ende eine plane Einsenkung zur wenigstens teilweisen Aufnahme eines Setzkopfs des Niets. Das hat den Vorteil, dass Setzkopf und Bremsscheibentopfkragen eine im Wesentlichen plane Fläche bilden und so ein Anhaften von Schmutz und Bremsbelagabrieb vermindert werden kann.

Weitere bevorzugte Ausführungsformen der Erfindung sind dadurch gekennzeichnet, dass die zum Bremsscheibentopf hin gerichtete Reibscheibe eine axial gerichtete Einsenkung zur Auflage des Kragens des Bremsscheibentopfs besitzt. Wenn dann der Innendurchmesser der Einsenkung größer ist als ein Außendurchmesser des Kragens, so dass die Reibscheibe zum Bremsscheibentopf ausschließlich mittels der Nieten zentriert ist, hat das den Vorteil, dass bei best möglich bearbeitbarer Auflage des Bremsscheibentopfs auf der Reibscheibe eine zentrierende Nietverbindung zwischen den beiden Teilen bereitgestellt werden kann, die einerseits eine Übertragung hoher Bremskräfte ermöglicht und andererseits bezüglich der Wärmeübertragung von Reibscheibe auf Bremsscheibentopf eine bestmögliche Isolationswirkung bei gleichzeitig großer Verzugsfreiheit bewirkt. Zusätzlich ist von Vorteil, wenn die Einsenkung den Kragen des Bremsscheibentopfs vollständig aufnimmt und/oder wenn die plane Einsenkung des Kragens des Bremsscheibentopfs den Setzkopf des Niets vollständig aufnimmt.

Vorteilhafterweise kann so die Fortsetzung der Reibscheibenfläche nach innen, hin bis zum Bremsscheibentopfmantel im Wesentlichen eben gestaltet werden, was eine Ansetzten von Schmutz und ein Eindringen von Wasser in die Verbindung von Bremsscheibentopf und Reibscheibe erschwert.

Ein bevorzugtes Ausführungsbeispiel der vorliegenden Erfindung einer Bremsscheibe ist in der beigefügten Zeichnung dargestellt. Erfindungswesentlich können sämtliche näher beschriebenen Merkmale sein. Es zeigen:
Fig.1 eine erfindungsgemäße Bremsscheibe in räumlicher Darstellung mit Blick auf den Bremsscheibentopf,
Fig.2 die Bremsscheibe nach Figur 1 in einem vergrößerten Teilschnitt (die Schnittebene enthält die Drehachse), gegenüber Figur 1 um eine in der Zeicheneben liegende Vertikalachse gedreht, im Bereich der Befestigungsstelle der Reibscheibe am Bremsscheibentopf,
Fig.3 eine noch weiter vergrößerte und um 180 Winkel-Grad gedrehte Teilansicht eines Niets aus Fig.2,
Fig.4 eine Aufsicht auf die Topf-Seite der Bremsscheibe, sowie
Fig.5 eine Teil-Aufsicht auf die gegenüber Fig. 4 um 180 Winkel-Grad gedrehte Rückseite der Bremsscheibe, mit einer Darstellung der Verbindung beider Reibscheiben über Stege, mittels einer Bruchdarstellung eines Teils der Reibscheibe.

Die in den Figuren dargestellte Bremsscheibe 1 besteht aus einem Bremsscheibentopf 3 und einem Reibring 2 und ist für eine Montage an einer nicht gezeigten Radnabe vorgesehen, um mit dieser im Betrieb um die Drehachse D zu rotieren. Der einstückige innengekühlte und in Grauguss gefertigte Reibring 2 besteht aus zwei Reibscheiben 2', 2" mit dazwischen liegenden und diese miteinander verbindenden Stegen 2''' einer Kühlluftführung. Die in Axialrichtung, d.h. in Richtung der Drehachse D betrachtet näher am Bremsscheibentopf 3 liegende ringförmige Reibscheibe 2' erstreckt sich in Radialrichtung R (bezüglich der Drehachse D) betrachtet mit einem sog. Befestigungsfortsatz 9 um ein gewisses Maß weiter zur Drehachse D hin als die andere in Axialrichtung weiter vom Bremsscheibentopf 3 entfernte Reibscheibe 2".

Im Überlappungsbereich zwischen dem genannten Befestigungsfortsatz 9 der Reibscheibe 2' und einem vom freien Ende des bezüglich der Drehachse D kreiszylindrischen Mantels 3a des Bremsscheibentopfes 3 in Radialrichtung R nach außen abstehenden Kragens 3b ist der Bremsscheibentopf 3 über sich in Axialrichtung erstreckende Nieten 5 mit der Reibscheibe 2' und somit mit dem Reibring 2 verbunden. In diesem Sinne wird vorliegend (und insbesondere in der Beschreibungseinleitung) von einer Verbindung zwischen dem Bremsscheibentopf 3 und dem Reibring 2 gesprochen.

In den Mantel 3a des Bremsscheibentopfes 3 sowie in geringem Umfang auch in den Boden 3c des Bremsscheibentopfes 3 sind gleichmäßig über dem Umfang des Bremsscheibentopfes 3 verteilt Aussparungen 7 eingebracht, in welche die Nieten 5 hineinragen, d.h. in denen die Nieten 5 zumindest anteilig platziert sind. Jede dieser Aussparungen 7, welche auch Abschnitte 7 mit reduzierter Wandstärke bilden, erstreckt sich in Axialrichtung, um den jeweils zugehörigen ebenso orientierten Niet 5 und dient zu seiner teiweisen Aufnahme bzw. zum Setzen des Niets 5 bei der Montage d.h. der Verbindung von Bremsscheibentopf 3 mit Reibring 2, wie ersichtlich in Axialrichtung. Dabei besitzen die Aussparungen 7 im Wesentlichen die Form eines Halbkreis-Zylinders und werden in den Mantel 3a des Bremsscheibentopfes 3 beim Gießen oder Schmieden eingeformt, so dass dieser Mantel 3a im Bereich der Aussparungen 7 zwar geschwächt ist, jedoch innen, d.h. von der Drehachse D aus betrachtet noch eine geschlossene Wand bildet. Selbstverständlich sind auch im Kragen 3b des Bremsscheibentopfs 3 Durchbrüche in Form von Bohrungen quasi als Fortsetzung zu den Aussparungen 7 vorgesehen, durch welche die Nieten 5 hindurch gesteckt sind. So können aufgrund dieser Aussparungen 7 die Nieten 5 näher zur Drehachse D hin angeordnet sein.

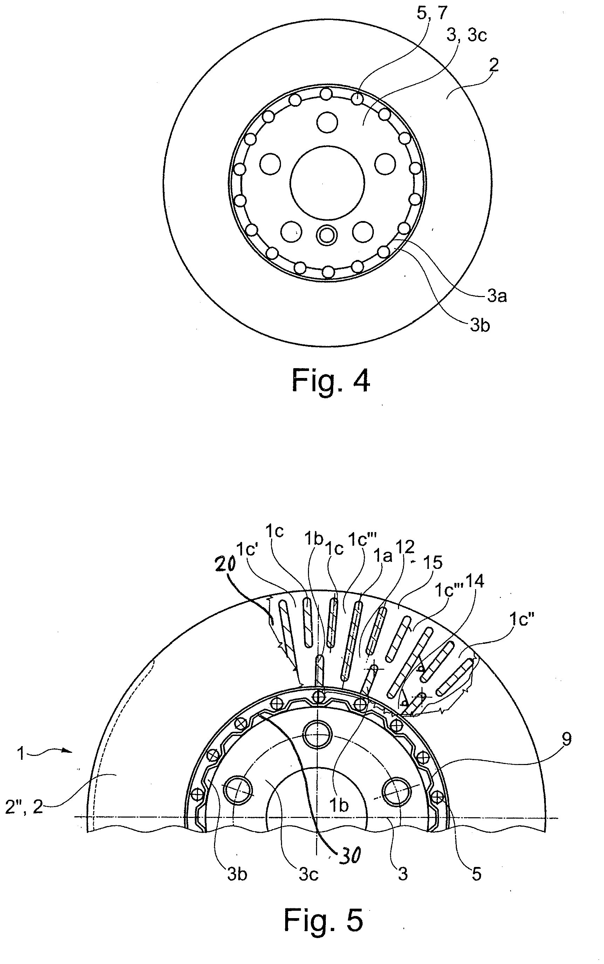

Die Figur 5 zeigt auf der Innenseite der Reibscheibe 2' der Bremsscheibe 1 eine sich in Umfangsrichtung über deren Kreisringfläche geometrisch regelmäßig wiederholende Stegkombination aus Stegen 1a und kürzeren Stegen 1b, 1c der innenbelüfteten Bremsscheibe 1. Die Reibscheiben 2', 2" des Reibrings 2 sind miteinander über die Stege 1a und die kürzeren Stege 1b, 1c verbunden, wobei die Stege 1a gleichzeitig Kühlkanäle 20 begrenzen, die sich in Umfangsrichtung über die Kreisringflächen der Reibscheiben 2', 2" ebenfalls geometrisch regelmäßig wiederholen. Die Kühlkanäle 20 erstrecken sich jeweils von einem Innenumfangsrand 14 der Reibscheiben 2', 2", am Beginn der Stege 1a bis zu einem Außenumfangsrand 15 der Reibscheiben 2', 2" der Bremsscheibe 1.

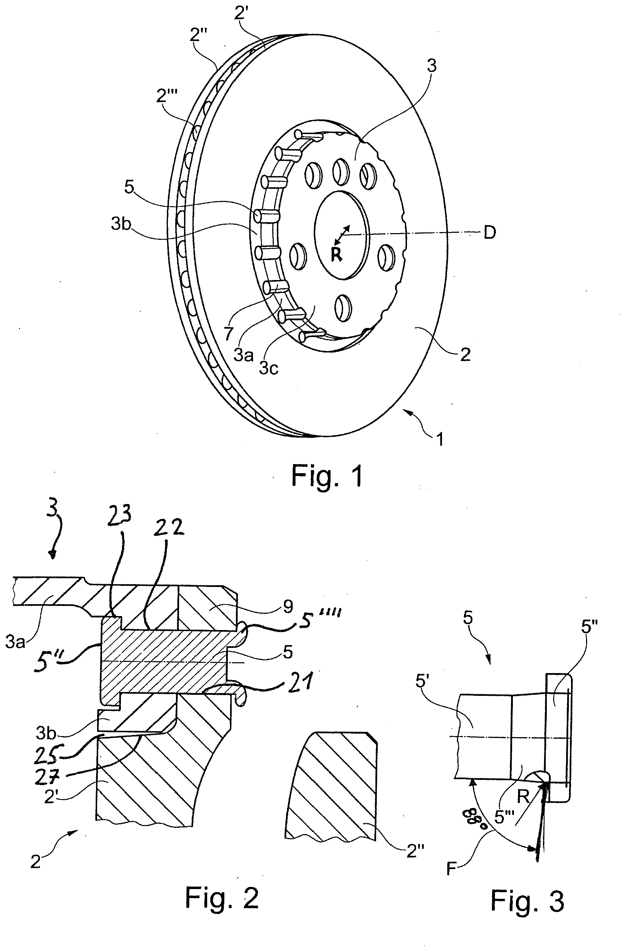

In Umfangsrichtung, mittig in jedem Kühlkanal 20 zwischen den jeweils gleich langen Stegen 1a innerhalb der Reibscheiben 2', 2" erstreckt sich jeweils der kurze Steg 1b von nahe des Innenumfangsrands 14 der Reibscheiben 2', 2" in Richtung deren Außenumfangsrand 15 bis zu einem ersten Durchmesser 12 der Reibscheiben 2', 2". Von diesem ausgehend, erstrecken sich radial weiter nach außen bis zum Außenumfangsrand 15 hin, zwei innerhalb des Kühlkanals 20 in Umfangsrichtung zum kurzen Steg 1b versetzte, erste weitere kurze Stege 1c, einer nach links, der andere nach rechts versetzt. Die ersten weiteren kurzen Stege 1c teilen die Kühlkanäle 20, in radialer Richtung vom kürzeren Steg 1b nach außen gerichtet, in drei Strömungskanäle 1c', 1c", 1c''' auf. Alle Stege 1a, 1b, 1c weisen im Wesentlichen eine einheitliche Stegbreite auf und sind vorne und hinten abgerundet. Dabei liegen die radial äußeren Enden der jeweiligen Stege 1a, 1c auf demselben Kreisumfang in der Nähe des Außenumfangrands 15 und die radial inneren Enden der jeweiligen Stege 1a auf demselben Kreisumfang in der Nähe des Innenumfangrands 14 der Bremsscheibe 1. Außerdem ist, von jedem der kürzeren Stege 1b ausgehend, die zu dem Bremsscheibentopf 3 hin gerichtete Reibscheibe 2' radial nach innen gerichtet verlängert und auf Höhe des Kragens 3b des Bremsscheibentopfes 3 mit einer Bohrung 21 in axialer Richtung versehen, die der Aufnahme des Niets 5 dient, der die Reibscheibe 2' an dem Bremsscheibentopf 3 befestigt. Schließköpfe 5"" aller Nieten 5 befinden sich an der sichtbaren Seite des Befestigungsfortsatzes 9 der Reibscheibe 2', während sich die Setzköpfe 5" der Nieten 5 vollständig versenkt in einer planen Einsenkung 23 des Kragens 3b des Bremsscheibentopfs 3 befinden, wie in Figur 2 dargestellt ist. Die zum Bremsscheibentopf 3 hin gerichtete Reibscheibe 2' besitzt ebenfalls eine axial gerichtete Einsenkung 27 zur Auflage des Kragens 3b des Bremsscheibentopfs 3, deren Innendurchmesser aufgrund des Radialspiels 25 größer ist als ein Außendurchmesser des Kragens 3b, so dass die Reibscheibe 2' und der Bremsscheibentopf 3 zueinander ausschließlich mittels der Nieten 5 zentriert sind.

Figur 3 zeigt eine Teilansicht eines Niets 5 ausgebildet als Halbhohlniet 5mm x 13mm mit Setzkopf 5" und Nietschaft 5'. Zum Setzkopf 5" hin ist der Nietschaft 5' konisch mit zunehmendem Durchmesser ausgebildet. Der Setzkopf 5" besitzt zum Nietschaft 5' hin gerichtet einen Freistich, so dass der mit einem Doppelpfeil F bezeichnete Winkel im Wesentlichen 88 Winkelgrad misst. Ein Betrag eines Radius R zwischen Konus 5''' des Nietschafts 5' und Freistich des Setzkopfs 5" ist nicht festgelegt und ergibt sich durch die Fertigung. Der Konus 5''' besitzt eine Länge von wenigstens 1,5mm und höchstens 4mm, wobei der Durchmesser des Konus 5''' am Setzkopf 5" 5,33mm beträgt. Versuche haben ergeben, dass diese Nietgeometrie bei einer Nietselbstzentrierung während des Setzens des Niets 5 ein vorteilhaftes Tragbild mit 100% Traganteil, was eine optimale Zentrierung und Kraftübertragung ergibt. Zusätzlich bewirken der konische Nietschaft 5' und der Freistich F des Setzkopfs 5" eine perfekte Abdichtung der Nietverbindung und so Schutz gegen korrosive Medien.

## Patentansprüche

1. Bremsscheibe (1) für eine Scheibenbremse, die aus einem Bremsscheibentopf (3) und wenigstens einem, mit diesem über Nieten (5) verbundenen Reibring (2) besteht, der ausschließlich über die Nieten (5) zum Bremsscheibentopf (3) zentriert ist, wobei ein Mantel (3a) des Bremsscheibentopfs (3) mit Abschnitten (7) mit reduzierter Wandstärke und/oder Durchbrüchen versehen ist, die am Außenumfang des Bremsscheibentopf-Mantels (3a) befindliche, axial gerichtete Material-Aussparungen (7) sind, die zur zumindest teilweisen Platzierung der axial gerichteten Nieten (5) dienen, **dadurch gekennzeichnet, dass** jeder Niet (5), vor seiner Verformung, wenigstens über einen Teilbereich seines Nietschaftes (5') im Bereich des Bremsscheibentopfs (3), von einem Setzkopf (5") ausgehend zu einem Niet-Schließkopf (5"") hin, sich konisch verjüngend ausgebildet ist und dass ein Übergang vom Nietschaft (5') zum Niet-Setzkopf (5") mit einem Axial-Freistich am Niet-Setzkopf (5") versehen ist.

2. Bremsscheibe (1) nach Anspruch 1, **dadurch gekennzeichnet, dass** der Reibring (2) wenigstens einen von der Reibfläche nach innen gerichteten Befestigungsfortsatz (9) aufweist, mit dem ein Kragen (3b) eines Bremsscheibentopf-Mantels (3a) durch die Nieten (5) verbunden ist.

3. Bremsscheibe (1) nach einem der Ansprüche 1 oder 2, **dadurch gekennzeichnet, dass** die Nieten (5) aus einem austenistischen, nichtrostenden Stahl bestehen.

4. Bremsscheibe (1) nach einem der Ansprüche 1 bis 3, **dadurch gekennzeichnet, dass** der Bremsscheibentopf (3) aus Leichtmetall oder aus Stahl oder aus einem Nichtmetallwerkstoff besteht.

5. Bremsscheibe (1) nach einem der Ansprüche 1 bis 4, **dadurch gekennzeichnet, dass** der Bremsscheibentopf (3) und der Reibring (2) mittels eines Taumel-Niet-Verfahrens miteinander verbunden werden.

6. Bremsscheibe (1) nach einem der Ansprüche 2 bis 5, **dadurch gekennzeichnet, dass** eine zu einer Bohrung (21) im Befestigungsfortsatz (9) zur Aufnahme des Niets (5) korrespondierende Bohrung (22) zur Aufnahme des Niets (5) im Kragen (3b) des Bremsscheibentopfs (3) an ihrem von der Reibscheibe (2) weg gerichteten Ende eine plane Einsenkung (23) besitzt, zur wenigstens teilweisen Aufnahme des Setzkopfs (5") des Niets (5).

7. Bremsscheibe (1) nach einem der Ansprüche 1 bis 6, **dadurch gekennzeichnet, dass** die zum Bremsscheibentopf (3) hin gerichtete Seite des Reibrings (2) eine axial gerichtete Einsenkung (27) zur Auflage des Kragens (3b) des Bremsscheibentopfs (3) besitzt.

8. Bremsscheibe (1) nach Anspruch 7, **dadurch gekennzeichnet, dass** der Innendurchmesser der Einsenkung (27) größer ist als ein Außendurchmesser des Kragens (3b).

9. Bremsscheibe (1) nach einem der Ansprüche 7 oder 8, **dadurch gekennzeichnet, dass** die Einsenkung (27) den Kragen (3b) des Bremsscheibentopfs (3) vollständig aufnimmt.

10. Bremsscheibe (1) nach einem der Ansprüche 6 bis 9, **dadurch gekennzeichnet, dass** die plane Einsenkung (23) des Kragens (3b) des Bremsscheibentopfs (3) den Setzkopf (5") des Niets (5) vollständig aufnimmt.

## Claims

1. A brake disc (1) for a disc brake which consists of a brake disc hub (3) and at least one friction ring (2) which is connected to the brake disc hub via rivets (5) and which is centred in relation to the brake disc hub (3) exclusively via the rivets (5), wherein a casing (3a) of the brake disc hub (3) is provided with portions (7) of reduced wall thickness and/or apertures which are axially directed material cut-outs (7) situated on the outer circumference of the brake disc hub casing (3a) and are used for at least partial placement of the axially directed rivets (5), **characterised in that** each rivet (5), prior to its deformation, at least over part of its rivet stem (5') in the region of the brake disc hub (3) is formed in a manner tapering conically starting from a factory head (5'') to a closing head (5"") of the rivet, and **in that** a transition from the rivet stem (5') to the factory head (5'') of the rivet is provided with an axial undercut on the factory head (5") of the rivet.

2. A brake disc (1) according to claim 1, **characterised in that** the friction ring (2) has at least one fastening extension (9), which is directed inwardly from the friction surface and to which a collar (3b) of a brake disc hub casing (3a) is connected by the rivets (5).

3. A brake disc (1) according to one of claims 1 or 2, **characterised in that** the rivets (5) are made of an austenitic, stainless steel.

4. A brake disc (1) according to one of claims 1 to 3, **characterised in that** the brake disc hub (3) is made of light metal, or steel, or a non-metallic material.

5. A brake disc (1) according to one of claims 1 to 4, **characterised in that** the brake disc hub (3) and the friction ring (2) are connected to one another by an orbital riveting process.

6. A brake disc (1) according to one of claims 2 to 5, **characterised in that** a bore (22) for accommodating the rivet (5) in the collar (3b) of the brake disc hub (3), said bore corresponding to a bore (21) in the fastening extension (9) for accommodating the rivet (5), has a planar depression (23) at its end which is directed away from the friction disc (2) in order to at least partially accommodate the factory head (5'') of the rivet (5).

7. A brake disc (1) according to one of claims 1 to 6, **characterised in that** the side of the friction ring (2) which is directed towards the brake disc hub (3) has an axially directed depression (27) on which the collar (3b) of the brake disc hub (3) can lie.

8. A brake disc (1) according to claim 7, **characterised in that** the inner diameter of the depression (27) is greater than an outer diameter of the collar (3b).

9. A brake disc (1) according to one of claims 7 or 8, **characterised in that** the depression (27) fully accommodates the collar (3b) of the brake disc hub (3) .

10. A brake disc (1) according to any one of claims 6 to 9, **characterised in that** the planar depression (23) of the collar (3b) of the brake disc hub (3) fully accommodates the factory head (5'') of the rivet (5).

## Revendications

1. Disque de frein (1) destiné à un frein à disques qui est constitué par un pot de disque de frein (3) et par au moins un anneau de friction (2) relié celui-ci au moyen de rivets (5), et centré par rapport au pot de disque de frein (3) uniquement par l'intermédiaire des rivets (5), dans lequel l'enveloppe (3a) du pot de disque de frein (3) comporte des segments (7) ayant une épaisseur de paroi réduite et/ou des évidements qui sont constitués par des évidements de matériau (7) dirigés axialement, situés sur la périphérie externe de l'enveloppe (3a) du pot de disque de frein, qui servent au positionnement au moins partiel des rivets dirigés axialement,
**caractérisé en ce qu'**
avant sa mise en forme, chaque rivet (5) s'amincit coniquement de sa tête d'engagement (5") vers sa tête d'obturation (5""), au moins dans une zone partielle de sa tige (5') dans la zone du pot de disque de frein (3), et il est prévu une transition entre l'arbre (5') du rivet et la tête d'engagement (5") de celui-ci, avec un dégagement axial au niveau de la tête d'engagement (5").

2. Disque de frein (1) conforme à la revendication 1,
**caractérisé en ce que**
l'anneau de friction (2) comporte au moins un prolongement de fixation (9) dirigé vers l'intérieur à partir de la surface de friction avec lequel un rebord (3b) de l'enveloppe (3a) du pot de disque de frein est relié par les rivets (5).

3. Disque de frein (1) conforme à l'une des revendications 1 et 2,
**caractérisé en ce que**
les rivets (5) sont réalisés en un acier austénitique inoxydable.

4. Disque de frein (1) conforme à l'une des revendications 1 à 3,
**caractérisé en ce que**
le pot de disque de frein (3) est réalisé en un métal léger ou en acier ou en un matériau non métallique.

5. Disque de frein (1) conforme à l'une des revendications 1 à 4,
**caractérisé en ce que**
le pot de disque de frein (3) et l'anneau de friction (2) sont reliés au moyen d'un procédé de rivetage par nutation.

6. Disque de frein (1) conforme à l'une des revendications 2 à 5,
**caractérisé en ce qu'**
un perçage (22) destiné à recevoir le rivet (5) situé dans le rebord (3b) du pot de disque de frein (3), correspondant à un perçage (21) situé dans le prolongement de fixation (9) destiné à recevoir le rivet (5) comporte à son extrémité située à distance du disque de friction (2) un renfoncement plan (23) pour la réception au moins partielle de la tête d'engagement (5") du rivet (5).

7. Disque de frein (1) conforme à l'une des revendications 1 à 6,
**caractérisé en ce que**
le côté de l'anneau de friction (2) dirigé vers le pot de disque de frein (3) comporte un renfoncement (27) dirigé axialement sur lequel peut s'appuyer le rebord (3b) du pot de disque de frein (3).

8. Disque de frein (1) conforme à la revendication 7,
**caractérisé en ce que**
le diamètre interne du renfoncement (27) est supérieur au diamètre externe du rebord (3b).

9. Disque de frein (1) conforme à l'une des revendications 7 et 8,
**caractérisé en ce que**
le renfoncement (27) reçoit la totalité du rebord (3b) du pot de disque de frein (3).

10. Disque de frein (1) conforme à l'une des revendications 6 à 9,
**caractérisé en ce que**
le renfoncement plat (23) du rebord (3b) du pot de disque de frein (3) reçoit la totalité de la tête d'engagement (5") du rivet (5).
